Europäisches Patentamt

European Patent Office

Office européen des brevets

(19)

(11) Veröffentlichungsnummer: **0 263 811 B1**

# EUROPÄISCHE PATENTSCHRIFT

(12)

(45) Veröffentlichungstag der Patentschrift: **22.01.92**

(51) Int. Cl.⁵: **F16K 11/074**

(21) Anmeldenummer: **87890220.4**

(22) Anmeldetag: **05.10.87**

(54) **Sanitäre Eingriff-Mischbatterie.**

(30) Priorität: **06.10.86 DE 3633995**

(43) Veröffentlichungstag der Anmeldung:
**13.04.88 Patentblatt 88/15**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI NL**

(56) Entgegenhaltungen:
**DE-A- 3 310 080**
**DE-A- 3 500 966**
**GB-A- 2 156 495**

(73) Patentinhaber: **IDEAL-STANDARD GMBH**
**Euskirchener Strasse 80**
**W-5300 Bonn 1(DE)**

(72) Erfinder: **Bergmann, Konrad, Dr.**
**Zur Philippsburg 70**
**W-5560 Wittlich(DE)**

(74) Vertreter: **Puchberger, Georg, Dipl.-Ing.**
**Patentanwälte Dipl.-Ing. Georg Puchberger**
**Dipl.-Ing. Rolf Puchberger Dipl.-Ing. Peter**
**Puchberger Singerstrasse 13 Postfach 55**
**A-1010 Wien(AT)**

## Beschreibung

Die Erfindung bezieht sich auf eine sanitäre Eingriff-Mischbatterie mit aus mindestens zwei Scheiben gebildeten Steuerelementen, von denen eine als feststehende Ventilsitzscheibe dient und zwei Einlaßöffnungen für kaltes und warmes Wasser aufweist, während die zweite Scheibe auf der Ventilsitzscheibe bewegliche angeordnet ist und ein mit den Einlaßöffnungen zusammenwirkende Steuerkante aufweist, mittels welcher in den gebräuchlichen, eine sogenanne Komfortzone abdekkenden Mischwassertemperaturbereichen und damit in den entsprechenden Mittelstellungen des Bedienungsgriffes der freie Strömungsquerschnitt im Bereich der Einlaßöffnung für das kalte Wasser im Vergleich zu der entsprechenden Warmwasserseite mindestens teilweise beschnitten ist, gemäß dem Oberbegriff des Anspruches 1.

Beim Betrieb von Mischarmaturen in Verbindung mit thermisch oder hydraulisch gesteuerten Durchlauferhitzern kommt es häufig zu Fehlschaltungen in den üblichen Mischwassertemperaturbereichen, da die Erhitzer bestimmte Mindestdurchlaufmengen benötigen. Werden diese Mindestdurchlaufmengen unterschritten, so schalten die Erhitzer ganz oder teilweise ab.

Zur Vermeidung dieser Fehlschaltungen sind Eingriff-Mischbatterien der eingangs genannten Art bekannt, bei denen eine Mischkammeröffnung in der beweglichen Scheibe in einer bestimmten Weise gegenüber einem symmetrischen Lochbild in der feststehenden Ventilsitzscheibe asymmetrisch gestaltet ist, um sicherzustellen, daß in den genannten Mischwassertemperaturbereichen der freie Strömungsquerschnitt im Bereich der Einlaßöffnung für das kalte Wasser kleiner ist als der auf der entsprechenden Warmwasserseite. Derartige Mischbatterien, von denen die Erfindung ausgeht, sind aus der DE-A-3 310 080 bekannt. Sie haben sich in der Praxis bewährt. Nachteilig bei den vorbekannten Ausführungen ist, daß die bewegliche Scheibe wegen der speziellen Gestaltung der Mischkammeröffnung ein besonderes, d.h. von den entsprechenden Scheiben bei üblichen Eingriff-Mischbatterien abweichendes Bauteil darstellen muß. Aus der GB-A-2 156 495 ist eine Einbau-Mischbatterie mit scheibenförmigen Steuerelementen bekannt, in denen Kalt- und Warmwasseröffnungen vorgesehen sind, die Kaltwasseröffnung ist hier gleich weit wie die Warmwasseröffnung versetzt.

Der Erfindung liegt nach alledem die Aufgabe zugrunde, eine sanitäre Mischbatterie der eingangs genannten Art zu schaffen, bei der die bewegliche Scheibe eine übliche Gestaltung aufweist und die feststehende Ventilsitzscheibe eine übliche Gestaltung aufweisen kann. Die Mischbatterie soll ferner einfach im Aufbau und leicht herstellbar sein und eine sichere Funktion in Verbindung mit thermisch oder hydraulisch gesteuerten Durchlauferhitzern gewährleisten.

Bei der erfindungsgemäßen sanitären Mischbatterie wird die zuvor gezeigte Aufgabe gemäß dem Kennzeichen des Anspruches 1 gelöst.

Zur Lösung der erfindungsgemäßen Aufgabe, die bewegliche Scheibe als ein unverändertes Bauteil zu verwenden, kann auch das Kennzeichen des Anspruches 2 verwendet werden.

Nach einem ausgestaltenden Merkmal der Erfindung ist die Einlaßöffnung für das kaltes Wasser nierenförmig gestaltet, wobei der innenliegende Öffnungsrand eingezogen ist. Nach einer weiteren Ausgestaltung der Erfindung ist die Längenausdehnung der Einlaßöffnung für das warme Wasser größer als die der Einlaßöffnung für das kalte Wasser.

Eine weitere Lösung der erfindungsgemäßen Hauptaufgabe ist im Anspruch 6 gekennzeichnet, wonach der Flächenschwerpunkt des Querschnittes der Einlaßöffnung für das kalte Wasser in Öffnungsrichtung der Steuerkante der beweglichen Scheibe gegenüber der Einlaßöffnung für das warme Wasser radial versetzt ist.

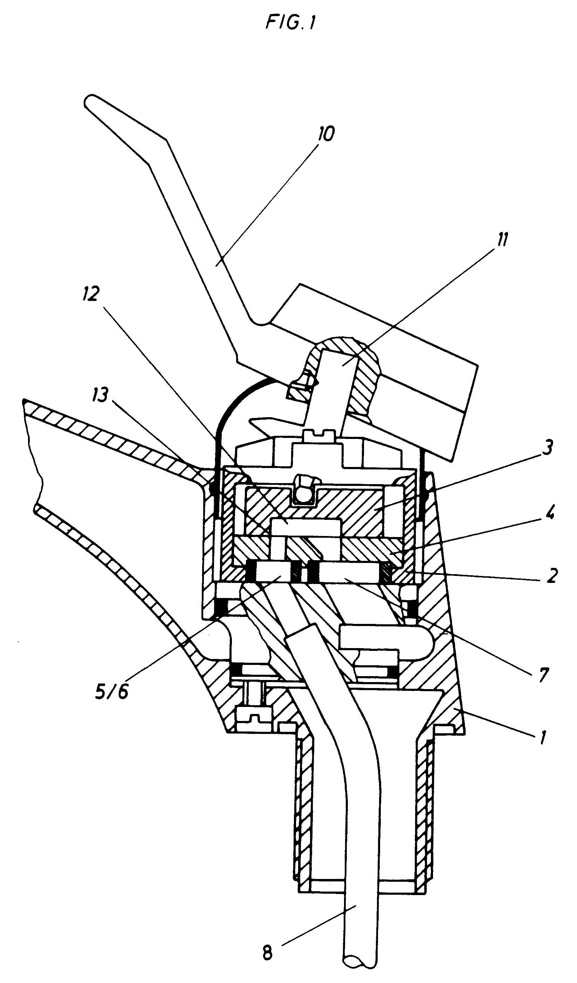

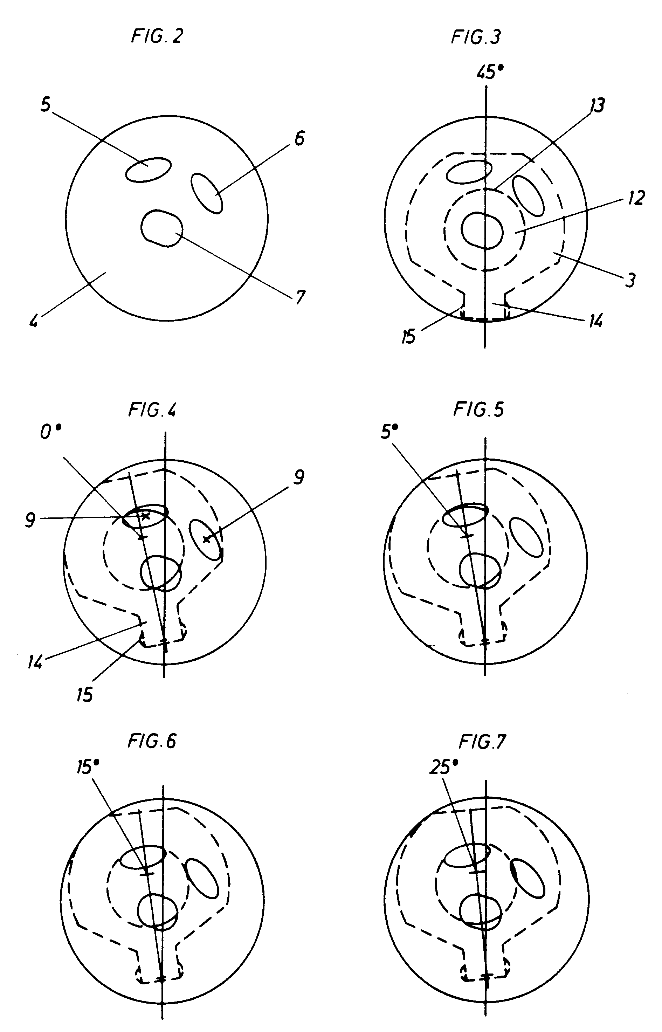

In der Zeichnung ist der Erfindungsgegenstand in drei Ansführungsbeispielen dargestellt, und zwar zeigen: Fig. 1 eine erfindungsgemäße Eingriff-Mischbatterie im Längsschnitt, Fig.2 die feststehende Ventilsitzscheibe gemäß dem ersten Ausführungsbeispiel in einer Ansicht von unten,

Fig. 3 bis 13 Ansichten auf die feststehende Ventilsitzscheibe gemäß

Fig.2 von unten, wobei sich hinter der Ventilsitzscheibe die bewegliche Scheibe in verschiedenen Funktionsstellungen befindet, und zwar in der geschlossenen Stellung (Fig.3), in Warmwasserstellungen (Fig. 4-7), in Mischwasserstellungen (8-12) sowie in Kaltwasserstellung (Fig.13),

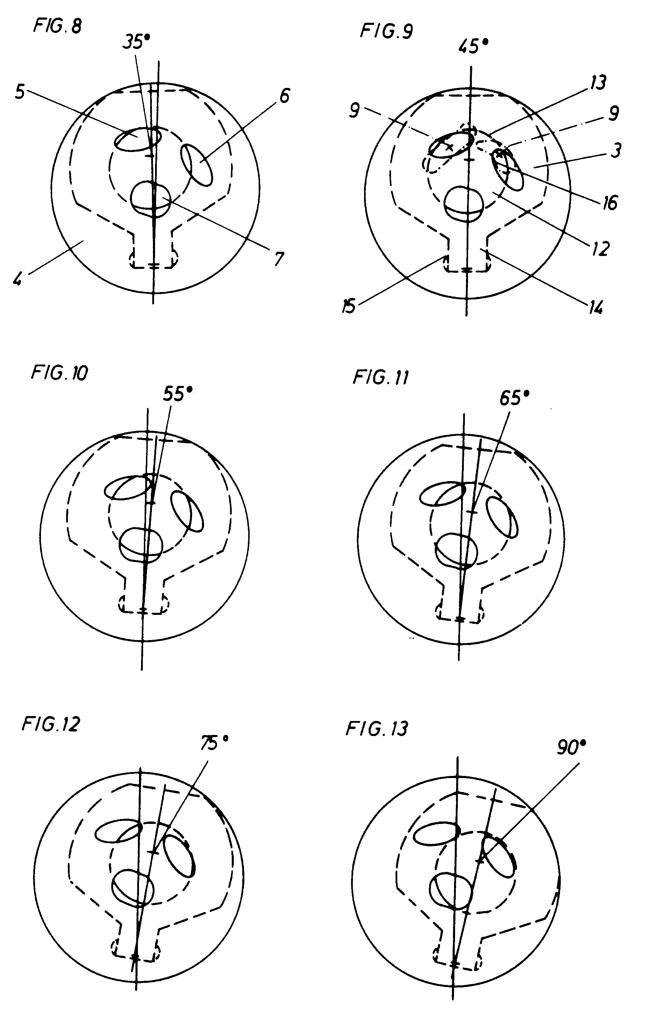

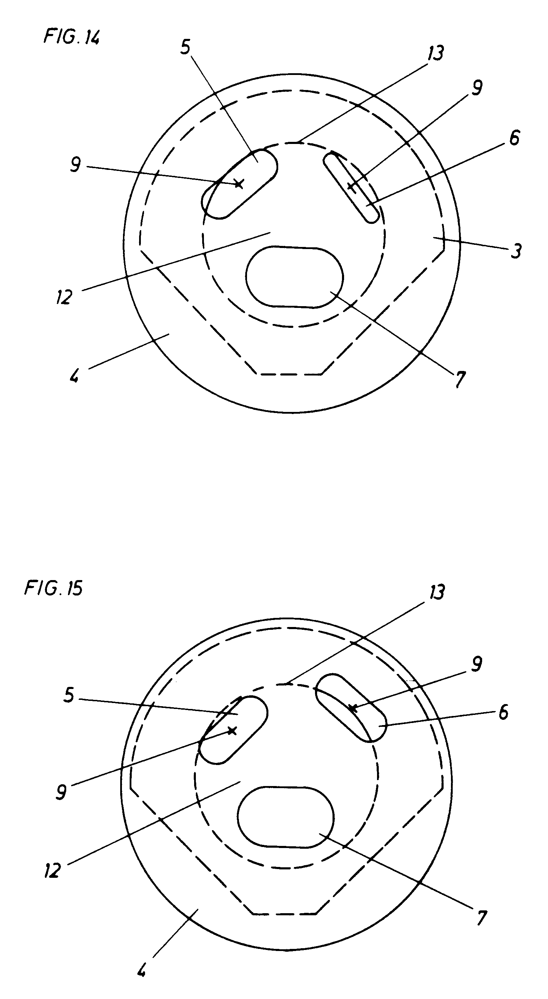

Fig. 14 die feststehende Ventilsitzscheibe gemäß dem zweiten Ausführungsbeispiel in einer Ansicht von unten, wobei sich hinter der Ventilsitzscheibe die bewegliche Scheibe befindet, und zwar genau in der Mittelstellung entsprechend Fig.9 und

Fig.15 die feststehende Ventilsitzscheibe gemäß dem dritten Ausführungsbeispiel mit einer Anordnung der beweglichen Scheibe gemäß Fig.14 bzw. Fig.9.

Die Erfindung wird nun anhand der Zeichnungen beschrieben. In Fig.1 ist mit 1 ein Ventilgehäuse bezeichnet, in dem eine Kartusche 2 mit aus zwei Scheiben 3 und 4 gebildeten Steuerelementen angeordnet ist. Die Scheibe 4 ist feststehend und dient als Ventilsitzscheibe. Sie weist eine Einlaßöffnung 5 für warmes Wasser und eine Einlaßöffnung 6 für kaltes Wasser auf sowie eine Auslaßöffnung 7 für das Mischwasser,welche zu einem Auslauf führt.

Wie aus den Fig. 3 bis 13 ersichtlich, sind die Flächenschwerpunkte 9 der Querschnitte der Einlaßöffnungen 5, 6 um einige Winkelgrade in Richtung auf die Kaltwasserstellung versetzt. Auf diese Weise wird eine hydraulische Asymmetrie in den Mittelstellungen der beweglichen Scheibe 3 bzw. eines diese Scheibe 3 betätigenden hebelförmigen Bedienungsgriffes 10 erzielt. Für diese Betätigung steht der Bedienungsgriff 10 mit einem Steuerhebel 11 in Verbindung, welcher in eine Ausnehmung der beweglichen Scheibe 3 eingreift, die verschieb- und schwenkbar (für die Mengen- bzw. Temperatursteuerung) angeordnet ist und eine Öffnung in der Form einer nur zur Ventilsitzscheibe 4 hin offenen Umlenkkammer 12 besitzt, die mit den Einlaßöffnungen 5, 6 und der Auslaßöffnung 7 mittels einer Steuerkante 13 im unterschiedlichen Maße in Überdeckung bringbar ist. Dabei steht die Einlaßöffnung 5 für das warme Wasser über ein Anschlußröhrchen 8 mit einem nicht dargestellten Durchlauferhitzer in Verbindung. Die bewegliche Scheibe 3 ist mit einem Fortsatz 14 mit einem verdickten Ende 15 versehen, welches zwischen nicht gezeigten, parallel zueinander verlaufenden Rippen an der Innenwandung des Gehäuses der Kartusche 2 geführt ist.

Aufgrund der erfindungsgemäßen hydraulischen Asymmetrie in den Mittelstellungen des Bedienungsgriffes 10 und damit in den gebräuchlichen, eine sogenannte Komfortzone abdeckenden Mischwassertemperaturbereichen ist sichergestellt, daß der freie Strömungsquerschnitt im Vergleich zur Warmwasserseite im Bereich der Einlaßöffnung 6 für das kalte Wasser (bei den Ausführungen gemäß den Fig. 3-13 und 15 mit besonderer Unterstützung der Steuerkante 13) deutlich beschnitten ist. Der freie Strömungsquerschnitt für das warme Wasser bleibt in den genannten Mittelstellungen unbeeinflußt bzw. weitgehendst unbeeinflußt.

Für die Lösung der erfindungsgemäßen Aufgabe nach Anspruch 1 und damit zur Erzielung einer hydraulischen Asymmetrie ist es ausreichend, nur die Flächenschwerpunkte der Querschnitte der Einlaßöffnungen in der feststehenden Ventilsitzscheibe um einige Winkelgrade in Richtung auf die Kaltwasserstellung zu versetzen. Dies bedeutet, daß die Einlaßöffnungen einander identisch sein können, wie dies in den Fig.3-13 gezeigt ist.

Gemäß dem Anspruch 2 ist die Aufgabenlösung erfindungsgemäß aber auch allein dadurch erzielbar, indem man die Einlaßöffnung 5 für das warme Wasser im Querschnitt größer ausbildet als die Einlaßöffnung 6 für das kalte Wasser. Auch hiedurch erhält man in den Mittelstellungen des Bedienungsgriffes eine hydraulische Asymmetrie. Die Flächenschwerpunkte 9 müssen bei dieser Lösung also nicht versetzt sein, was in Fig.14 dargestellt ist, und zwar genau in der Mittelstellung des Bedienungsgriffes (entsprechend Fig.9).

Bei dem strichpunktiert gezeigten Beispiel nach der Fig.9 sind beide Lösungsmittel verwirklicht, d.h. die Flächenschwerpunkte 9 sind auf die Kaltwasserstellung versetzt und die Strömungsquerschnitte der Einlaßöffnungen 5, 6 sind unterschiedlich groß, wobei die Längenausdehnung der Einlaßöffnung 5 für warmes Wasser größer ist als die Einlaßöffnung 6 für das kalte Wasser, die ferner eine nierenförmige Gestaltung aufweist und deren innenliegender Rand 16 eingezogen ist.

Wie bereits erwähnt, sind die dargestellten und beschriebenen Ausführungen nur Beispiele zur Verwirklichung der Erfindung und die Erfindung ist nicht darauf beschränkt, vielmehr sind im Rahmen des erfindungsgemäßen Grundgedankens, insbesondere in bezug auf die spezielle Gestaltung und Anordnung der Einlaßöffnungen, auch noch andere Möglichkeiten gegeben. So könnte der Flächenschwerpunkt des Querschnittes der Einlaßöffnung 6 für kaltes Wasser auch allein um einige Winkelgrade auf die Kaltwasserstellung versetzt sein.

Ferner sind zur Lösung der erfindungsgemäßen Aufgabe auch Versetzungen der genannten Schwerpunkte zueinander in radialer Richtung zur Erzielung der hydraulischen Asymmetrie denkbar, wie dies im Anspruch 5 gekennzeichnet und in Fig.15 gezeigt ist.

Zu dem Ausdruck Komfortzone wird noch erwähnt, daß diese den Mischwassertemperaturbereich zwischen etwa 35°C und 45°C umfaßt. Ferner soll innerhalb dieser Komfortzone eine relativ große Schwenkbewegung des Bedienungshebels eine nur vergleichsweise geringe Mischwassertemperaturänderung bewirken.

Schließlich wird noch darauf hingewiesen, daß eine erfindungsgemäße Mischbatterie nach dem Anspruch 2 auch als Zweigriff-Mischbatterie mit zwei Absperrventilen für warmes und kaltes Wasser ausgebildet sein kann. Die Absperrventile sind dabei ebenfalls mit scheibenförmigen Steuerelementen ausgerüstet, wobei die Einlaßöffnung des Absperrventiles für das warme Wasser größer ist als die Einlaßöffnung des Kaltwasser-Absperrventiles.

## Patentansprüche

1.  Sanitäre Eingriff-Mischbatterie mit aus mindestens zwei Scheiben (3, 4) gebildeten Steuerelementen, von denen eine als feststehende Ventilsitzscheibe (4) dient und zwei Einlaßöffnungen (5, 6) für kaltes und warmes Wasser aufweist, während die zweite Scheibe (3) auf der Ventilsitzscheibe (4) beweglich angeordnet ist und eine mit den Einlaßöffnungen (5, 6) zusammenwirkende Steuerkante (13) aufweist, mittels welcher in den gebräuchlichen, eine sogenannte Komfortzone abdeckenden Mischwassertemperaturberichen und damit in den entsprechenden Mittelstellungen des Bedienungsgriffes (10) der freie Strömungsquerschnitt im Bereich der Einlaßöffnung (6) für das kalte Wasser im Vergleich zu der entsprechenden Warmwasserseite teilweise beschnitten ist, dadurch gekennzeichnet, daß der Flächenschwerpunkt (9) des Querschnittes der Einlaßöffnung (6) für das kalte Wasser zur Erzielung einer hydraulischen Asymmetrie in den Mittelstellungen des Bedienungsgriffes (10) einen größeren Abstand zur Ebene der Mittelstellung des Bedienungsgriffes (10) aufweist als der Flächenschwerpunkt des Querschnittes der Einlaßöffnung (5) für warmes Wasser.

2. Sanitäre Eingriff-Mischbatterie nach dem Oberbegriff des Anspruches 1, dadurch gekennzeichnet, daß der Flächenschwerpunkt des Querschnittes der Einlaßöffnung für das kalte Wasser in Öffnungsrichtung der Steuerkante (13) der beweglichen Scheibe (3) gegenüber der Einlaßöffnung für das warme Wasser radial versetzt ist.

3. Sanitäre Eingriff-Mischbatterie nach Anspruch 1 oder 2, dadurch gekennzeichnet, daß die Einlaßöffnung (5) für das warme Wasser größer ist als die Einlaßöffnung (6) für das kalte Wasser.

4. Sanitäre Eingriff-Mischbatterie nach Anspruch 1, 2 oder 3, dadurch gekennzeichnet, daß die Einlaßöffnung (6) für das kalte Wasser nierenförmig gestaltet ist, wobei der innenliegende Öffnungsrand (16) eingezogen ist.

5. Sanitäre Eingriff-Mischbatterie nach einem der vorhergehenden Ansprüche, dadurch gekennzeichnet, daß die Längenausdehnung der Einlaßöffnung (5) für das warme Wasser größer ist als die der Einlaßöffnung (6) für das kalte Wasser.

6. Sanitäre Eingriff-Mischbätterie nach Anspruch 1, 3, 4 oder 5, dadurch gekennzeichnet, daß der Flächenschwerpunkt des Querschnittes der Einlaßöffnung für das kalte Wasser in Öffnungsrichtung der Steuerkante (13) der beweglichen Scheibe (3) gegenüber der Einlaßöffnung für das warme Wasser radial versetzt ist.

## Claims

1. A single-lever sanitary mixer tap comprising control elements which are formed from at least two discs (3, 4) of which one serves as a stationary valve seat disc (4) and has two inlet openings (5, 6) for cold and hot water while the second disc (3) is arranged movably on the valve seat disc (4) and has a control edge (13) which co-operates with the inlet openings (5, 6) and by means of which, in the usual mixed water temperature regions which cover what is known as the comfort zone and thus in the corresponding central positions of the operating lever (10), the free flow cross-section is partially cut in the region of the inlet opening (6) for the cold water, in comparison with the corresponding hot water side, characterised in that the centroid (9) of the cross-section of the inlet opening (6) for the cold water is at a greater spacing relative to the plane of the central position of the operating lever (10) than the centroid of the cross-section of the inlet opening (5) for hot water, in order to achieve hydraulic asymmetry in the central positions of the operating lever (10).

2. A single-lever sanitary mixer tap as set forth in the classifying portion of claim 1 characterised in that the centroid of the cross-section of the inlet opening for cold water is radially displaced in the direction of opening of the control edge (13) of the movable disc (3) relative to the inlet opening for the hot water.

3. A single-lever sanitary mixer tap according to claim 1 or claim 2 characterised in that the inlet opening (5) for the hot water is larger than the inlet opening (6) for the cold water.

4. A single-lever sanitary mixer tap according to claim 1, claim 2 or claim 3 characterised in that the inlet opening (6) for the cold water is of a reniform configuration, wherein the inwardly disposed edge (16) is drawn in.

5. A single-lever sanitary mixer tap according to one of the preceding claims characterised in that the longitudinal extent of the inlet opening (5) for the hot water is greater than that of the inlet opening (6) for the cold water.

6. A single-lever sanitary mixer tap according to claim 1, 3, 4 or 5 characterised in that the centroid of the cross-section of the inlet opening for the cold water is radially displaced in the direction of opening of the control edge (13) of the movable disc (3) relative to the inlet opening for the hot water.

## Revendications

1. Mélangeur sanitaire à levier de commande unique, comportant un système interne constitué par au moins deux disques (3,4) dont l'un (4) est fixe et sert de siège de réglage de débit, grâce à deux orifices d'entrée (5, 6) pour l'eau froide et l'eau chaude, tandis que le deuxième disque (3) est adapté à se déplacer sur le disque fixe (4) et présente une bordure de réglage (13) adaptée à coopérer avec les orifices d'entrée (5 - 6), pour assurer un débit d'eau à température mitigée dans une plage dite de confort, les positions moyennes usuelles de la manette de commande (10) étant déterminées, à cet effet, pour que la section libre de l'orifice d'entrée de l'eau froide (6) soit proportionnée à celle de l'orifice d'entrée de l'eau chaude (5), caractérisé en ce que le centre de gravité de la surface (9) de la section de l'orifice d'entrée de l'eau froide (6), en vue d'assurer une asymétrie hydraulique des positions moyennes du levier de commande (10), présente par rapport au plan de la position moyenne de la manette de commande (10) un écart supérieur à celui du centre de gravité de la section de l'orifice d'entrée de l'eau chaude (5).

2. Mélangeur sanitaire à levier de commande unique, du genre défini dans le préambule de la Revendication 1, caractérisé en ce que le centre de gravité de la section de l'orifice d'entrée de l'eau froide (6) est décalé radialement dans le sens du mouvement d'ouverture de la bordure de réglage (13) du disque mobile (3) par rapport à l'orifice d'entrée de l'eau chaude (5).

3. Mélangeur sanitaire à levier de commande unique, selon la Revendication 1 ou 2, caractérisé en ce que l'orifice d'entrée d'eau chaude (5) est plus grand que l'orifice d'entrée d'eau froide (6).

4. Mélangeur sanitaire à levier de commande unique, selon la Revendication 1, 2 ou 3, caractérisé en ce que l'orifice d'entrée d'eau froide (6) présente une section de forme oblongue, ayant du côté intérieur un bord rétreint (16).

5. Mélangeur sanitaire à levier de commande unique, selon l'une des Revendications précédentes,caractérisé en ce que l'orifice d'entrée de l'eau chaude (5) est plus étendu dans le sens de la longueur que l'orifice d'entrée de l'eau froide (6).

6. Mélangeur sanitaire à levier de commande unique, selon la Revendication 1, 3, 4 ou 5, caractérisé en ce que le centre de gravité de la section de l'orifice d'entrée de l'eau froide est décalé radialement par rapport à l'orifice d'entrée de l'eau chaude dans le sens du mouvement d'ouverture de la bordure de réglage (13) du disque mobile (3).

FIG. 1

FIG. 2

FIG. 3

45°

FIG. 4

0°

FIG. 5

5°

FIG. 6

15°

FIG. 7

25°

FIG. 8 — 35°
5 6 7 4

FIG. 9 — 45°
9 13 9 3 16 12 15 14

FIG. 10 — 55°

FIG. 11 — 65°

FIG. 12 — 75°

FIG. 13 — 90°

FIG. 14

FIG. 15